# NEW EUROPEAN PATENT SPECIFICATION

(11) **EP 0 229 292 B2**
(45) Date of publication and mention of the opposition decision: **02.09.1998**
(45) Mention of the grant of the patent: 28.08.1991
(21) Application number: 86116836.7
(22) Date of filing: 03.12.1986
(51) Int. Cl.: G11B 11/00

(54) **Optical-magnetic recording medium**
Optisch-magnetischer Aufzeichnungsträger
Support d'enregistrement magnéto-optique

(30) Priority: 05.12.1985 JP 272488/85; 27.12.1985 JP 293094/85
(43) Date of publication of application: 22.07.1987
(73) Proprietor: Hitachi Maxell Ltd., Osaka-fu (JP)
(72) Inventor: Akire, Gotoh, Toride-shi Ibaraki-ken (JP); Jun-ichi, Umeda, Tenkuba-gun Ibaragi-ken (JP); Kunio, Wakai, Itasoma-gun Ibaragi-ken (JP); Noriyuki, Ogihara, Kokubunji-shi Tokyo-to (JP)
(74) Representative: von Kreisler, Alek, Dipl.-Chem.

(56) References cited:
- EP-A- 184 034
- EP-A- 0 111 988
- EP-A- 0 179 463
- DE-A- 3 317 101
- DE-A- 3 536 210
- DE-A- 3 611 296
- DE-C- 2 342 886
- FR-A- 2 558 632
- GB-A- 2 141 864
- JP-A- 5 984 358

## Description

The present invention relates to an optical-magnetic recording medium which is possible to erase and rewrite informations repeatedly.

An optical-magnetic disc which is possible to erase and rewrite informations repeatedly is about to be put to practical use as well as a magnetic tape or a magnetic disc. Since a recording material applied to the recording layer of such an optical-magnetic disc has characteristics that
1. a recording layer with a large area and equality can be formed by sputtering method or vapor deposition method,
2. a large rate of S/N can be obtained because of the absence of granulation,
therefore, the amorphous alloy of rare earth metal such as gadolinium, terbium, dysprosium and transition metal such as iron cobalt has been watched before (on page 167 to 188 in Nikkei Electronics March 25, 1985).

GB-A-2 141 864 relates to magneto-optical recording media and methods of making such media. A magneto-optical recording medium comprises a substrate and a magneto-optical recording layer composed of a plurality of layers each of which contains a rare earth metal and a transition metal including tungsten. It is stated that the transition metal in the various layers can be an alloy of two or more transition metals.

However, the above mentioned rare earth metal and amorphous alloy of transition metal are such easily oxidizable materials that there is a fault that the materials can be easily corroded in the air, therefore, in case of applying these materials to the recording layer of an optical-magnetic recording medium, the necessary period of durability can not be satisfied without appending any means for preventing corrosion. The improvement of the corrosion-proof of the recording layer has been tried by coating the protecting film made of such as SiO, SiO₂ and Si₃N₄ between the disc substrate and the recording layer made of the above mentioned alloy and on the side of the surface of the recording layer.

In case of adapting the method of coating both of two sides of the recording layer with a protecting film as mentioned above, the production process of the optical-magnetic disc corresponding to the coating process is prolonged, therefore, the production cost of the optical-magnetic recording medium becomes expensive. Besides, in the above mentioned method there are problems that if a fault such as a pin hole or a hair crack is produced, the corrosion of the recording layer extends from the portion of the fault, therefore, high technology and quality control are needed to form the protecting film, on the contrary, the reliability of the recording layer as a means of preventing corrosion is low. Moreover, there is a problem that if the kind of the protecting film which is suitable to the component of the recording material forming the recording layer is not used, the corrosion of the recording layer is so quickened that it is difficult to select the most suitable protecting film.

JP 59-84358 discloses photo-magnetic thin filim recording media of amorphous alloys comprising one or mor of Ti, Zr, Hf, V, Nb, Ta, Mo, W, Mn, Tc, Re, Ru, Rh, Pd, Os, Ir and Pt. The composition is represented prferably by an alloy formula

(Rₓ T₁₋ₓ)_{1-y} My

in which R represents
at least one of Gd, Tb and Dy, T represents
at least one of Co and Fe, M represents
at least one of the elements referred to above,
x means 0.1 ≤ x ≤ 0.4 and y means 0.01 ≤ y ≤ 0.4.
The listing of amorphous alloys contains Tb, Fe inter alia as superior material for the magnetic film.

DE 23 42 886 C3 discloses a magnetic thin film wherein the magnetic layer is made of an alloy of an element selected from the rare earth metals, and one of the elements of Fe and Co. The alloy preferably made of Gd-Co or Gd-Fe can be doped with Tb, Dy or Ho.

The present inventors have studied the above problem and as the result of experiments, they have acquired the experimental results as follows:
1. In case of adding a hard corrosion element to an alloy of rare earth metal and transition metal, the hard corrosion element is concentrated on the surface of the alloy so as to form a strong corrosion-proof film.
2. In case of adding an element quickening the corrosion of the alloy in addition to the above mentioned hard corrosion element, the concentration phenomenon is furthermore quickened so as to form a corrosion-proof film in a short time.
3. In different from the case of coating the corrosion-proof protecting film, even if the hard corrosion element on the surface is removed by any reason, the above mentioned hard corrosion element included in the alloy is separated by turns on the surface of the alloy so as to keep the effect of the corrosion-proof.
4. In case of adding the hard corrosion element and the second additive element (referred to concentration element hereinafter) quickening the corrosion of the easier corrosion metal of the rare earth metal and the transition metal and quickening the concentration of the first additive element on the surface layer to the amorphous alloy of the rare earth metal and the transition metal, the hard corrosion element is concentrated on the surface of the alloy in a short time so as to form a strong corrosion-proof film.
5. In different from the case of coating the film, even if the hard corrosion element on the surface is removed by any reason, the above mentioned hard corrosion element incluced in the alloy is separated by turns on the surface of the alloy so as to form a corrosion-proof film with good durability.
6. In case of adding plural kinds of the above mentioned concentration elements in addition, the corrosion-proof of the alloy can be especially improved.

The present invention is made on the basis of the above mentioned acquirement and has its essential object to provide an optical magnetic recording medium which is able to eliminate the above mentioned problem.

Another object of the present invention is to provide an optical magnetic recording medium which is able to be produced with relatively simple process and enables to decrease necessary time for the process.

In order to accomplish the objects, the optical magnetic recording medium according to the present invention is defined in appended claim 1 or 2.

In a further embodiment, the recording layer of the optical-magnetical recording medium is formed by the recording material made of said alloy of rare earth metal, transition metal and the first additive element having hard corrosion in case of simple substance wherein the alloy may comprise a second additive element (referred to concentration quickening element hereinafter) quickening the corrosion of the easy corrosion element in the alloy and quickening the concentration of the first additive element on the surface of the alloy. Moreover, the present invention is further characterized in that the recording layer of the optical-magnetic recording medium is formed with the recording material made by adding the first element and plural kinds of the second elements quickening the corrosion of the rare earth metal and the transition metal and quickening the concentration of the first additive element.

Besides, the element selected from semi-conductor, non-metal and semi-metal can be used as a concentration quickening element. Of these elements, it is particularly preferable to use the element selected from the semi-conductor, non-metal and semi-metal such as silicon, germanium, boron, carbon and phosphorus.

Moreover, the second element quickening the concentration of the above mentioned first additive element is selected from semi-metal, semi-conductor and non-metal such as silicon, germanium, boron, carbon and phosphorus.

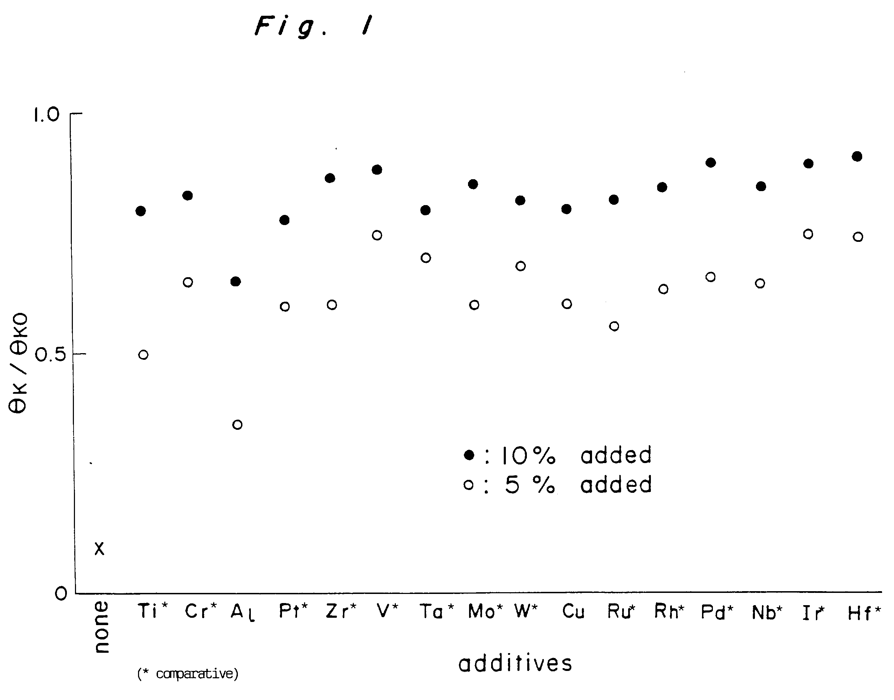

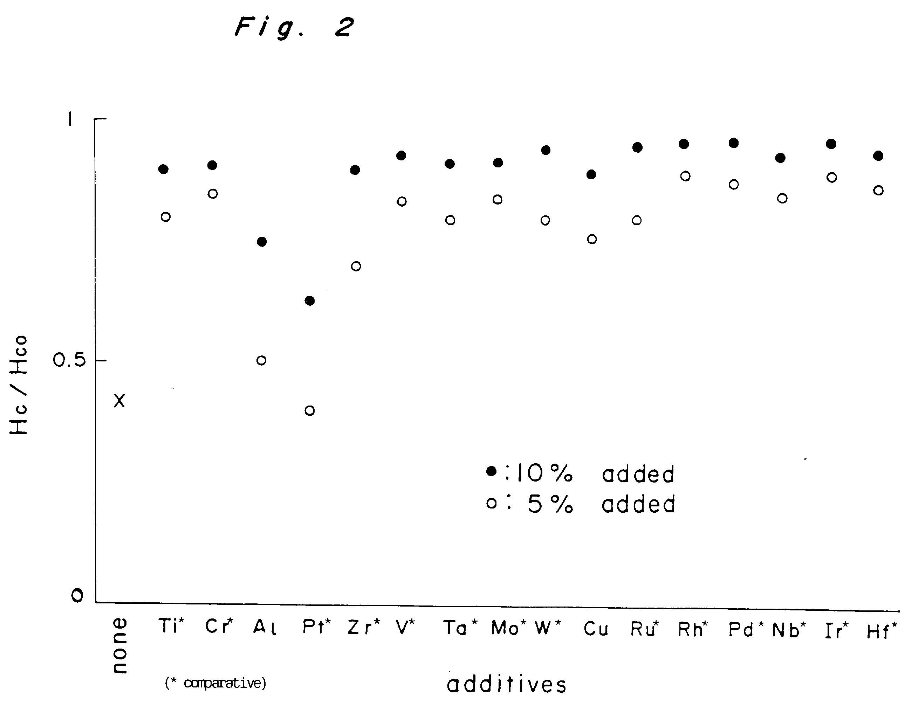

The attached drawings are graphs showing the effect of the present invention, wherein Figs. 1, 3, 5, 7 and 9 are graphs showing the change of the Kerr rotation angle when the material is aged for 25 hours in the atmosphere of 80° C and 85% RH, Figs. 2, 4, 6, 8 and 10 are graphs showing the change of the coercive force when the material is aged for 25 hours in the atmosphere of 80° C and 85% RH.

Of these graphs,
Fig. 1 is a graph showing the rate of the change of the Kerr rotation angle of the recording layer made of the recording material in which various kinds of hard corrosion elements are added,
Fig. 2 is a graph showing the rate of the change of the coercive force of the recording layer made of the recording material in which various kinds of hard corrosion elements are added,
Fig. 3 is a graph showing the rate of the change of the Kerr rotation angle of the recording layer made of the recording material in which phosphorus and a hard corrosion element are added,
Fig. 4 is a graph snowing the rate of the change of the coercive force of the recording layer made of the recording material in which phosphorus and a hard corrosion element are added,
Fig. 5 is a graph showing the rate of the change of the Kerr rotation angle of the recording layer made of the recording material in which carbon and a hard corrosion element are added,
Fig. 6 is a graph showing the rate of the change of the coercive force of the recording layer made of the recording material in which carbon and a hard corrosion element are added,
Fig. 7 is a graph showing the rate of the change of the Kerr rotation angle of the recording layer made of the recording material in which boron and a hard corrosion element are added,
Fig. 8 is a graph showing the rate of the change of the coercive force of the recording layer made of the recording material in which boron and a hard corrosion element are added,
Fig. 9 is a graph showing the rate of the change of the Kerr rotation angle of the recording layer made of the recording material in which silicon and a hard corrosion element are added,
Fig. 10 is a graph showing the rate of the chance of the coercive force of the recording layer made of the recording material in which silicon and a hard corrosion element are added,
Fig. 11 is a graph for explaining the effects of the examples 57 to 64,
Fig. 12 is a graph for explaining the effects of the examples 65 to 72,
Fig. 13 is a graph for explaining the effects of the examples 73 to 80,
Fig. 14 is a graph for explaining the effects of the examples 81 to 88, and
Fig. 15 is a graph showing the influence of the hard corrosion additive elements.

The comparison of the corrosion-proof between the recording layer of the present invention and the conventional recording layer without adding a special element is shown by showing concrete examples as follows.

It is noted that respective ratios in the examples are defined as mole ratios.

### EXAMPLES 1 TO 32 (comparative)

32 examples of an optical-magnetic recording medium were prepared in such a manner that each recording medium was formed by a recording layer of about 100 nm(1000 Å) thick on the surface of a glass substrate. The recording layer was formed of recording material mainly comprising Tb₂₀Fe₈₀ alloy by adding either 5 % of one of additive elements selected from a group consisting of titanium, chromium, aluminum, platinum, zirconium, vanadium, tantalum, molybdenum, tungsten (comparative), copper, ruthenium, rhodium, palladium, niobium, iridium and hafnium as a hard corrosion element or 10 % of any one of the elements mentioned above.

The respective recording layers were formed by the RF sputtering method under the sputtering condition of argon gas pressure of 0.667 Pa (5x10⁻³ Torr), sputtering power of 200 to 400 W, the distance of 55 mm between the substrate and the target and the substrate revolutions of 30 r.p.m.. The target was formed by disposing one or more small plate of the additive elements mentioned above with a predetermined area calculated from the sputtering rate above a circular plate of Tb₂₀Fe₈₀ alloy.

### EXAMPLES 33 TO 38 (inventive)

6 examples of the optical-magnetic recording medium were prepared in such a manner that each recording medium was formed by a recording layer of about 100 nm (1000 Å) thick on the surface of the glass substrate. The recording layer was made using the recording material comprising mainly Tb₂₀Fe₈₀ alloy by adding titanium as a hard corrosion element and phosphorus as a concentration quickening element, by adding chromium as a hard corrosion element and phosphorus as a concentration quickening element, or by adding aluminum as a hard corrosion element and phosphorus as a concentration quickening element. The components of the recording layer of each example are shown in the Table 1.

Besides, the method of making the examples of the recording layer and the thickness thereof and the sputtering condition were quite similar to those used in the examples 1 to 32.

### EXAMPLES 39 TO 44 (inventive)

6 examples of the optical-magnetic recording medium were prepared in such a manner that each recording medium was formed by a recording layer of about 100 nm (1000 Å) thick on the surface of the glass substrate. The recording layer was made using the recording material comprising mainly Tb₂₀Fe₈₀ alloy by adding titanium as a hard corrosion element and carbon as a concentration quickening element, by adding chromium as a hard corrosion element and carbon as a concentration quickening element, or by adding aluminum as a hard corrosion element and carbon as a concentration quickening element. The components of the recording layer of each example are shown in the Table 2.

Besides, the method of making the examples of the recording layer and the thickness thereof and the sputtering condition were quite similar to those used in the examples 1 to 32.

The target was formed by disposing one or more small plate of the hard corrosion elements mentioned above with a predetermined area calculated from the sputtering rate above a circular plate of Tb₁₇Fe₆₈C₁₅ alloy.

### EXAMPLES 45 TO 50 (inventive)

6 examples of the optical-magnetic recording medium were prepared in such a manner that each recording medium was formed by a recording layer of about 100 nm (1000 Å) thick on the surface of the glass substrate. The recording layer was made using the recording material comprising mainly Tb₂₀Fe₈₀ alloy by adding titanium as a hard corrosion element and boron as a concentration quickening element, by adding chromium as a hard corrosion element and boron as a concentration quickening element, or by adding aluminum as a hard corrosion element and boron as a concentration quickening element. The components of the recording layer of each example are shown in the Table 3.

Besides, the method of making the examples of the recording layer and the thickness thereof and the sputtering condition were quite similar to those used in the examples 1 to 32. The target was formed by disposing one or more small plate of the hard corrosion elements mentioned above with a predetermined area calculated from the sputtering rate above a circular plate of Tb₁₇Fe₆₈B₁₅ alloy.

### EXAMPLES 51 TO 56

6 examples of the optical-magnetic recording medium were prepared in such a manner that each recording medium was formed by a recording layer of about 100 nm (1000 Å) thick on the surface of the glass substrate. The recording layer was made using the recording material comprising mainly Tb₂₀Fe₈₀ alloy, by adding titanium as a hard corrosion element and silicon as a concentration quickening element (inventive) by adding chromium as a hard corrosion element and silicon as a concentration quickening element (inventive), or by adding aluminum as a hard corrosion element and silicon as a concentration quickening element (comparative). The components of the recording layer of each example are shown in the Table 4.

Besides, the method of making the examples of the recording layer and the thickness thereof and the sputtering condition were quite similar to those used in the examples 1 to 32. The target was formed by disposing one or more small plate of the hard corrosion elements mentioned above with a predetermined area calculated from the sputtering rate above a circular plate of Tb₁₇Fe₆₈Si₁₅ alloy.

The effect of the optical-magnetic recording medium of each of the above mentioned examples is explained with reference to Figs. 1 to 10 hereinafter.

Fig. 1 is a graph showing respective rates of the change of the Kerr rotation angle when each optical-magnetic recording medium of the examples 1 to 32 is aged for 25 hours in the atmosphere of 80° C and 85% RH, Fig. 2 is a graph showing the rate of the change of the coercive force when the optical-magnetic recording medium of each of the above mentioned examples is aged under the same condition as mentioned above, wherein the white circular marks show the rates when the hard corrosion element of 5% is added and the black circular marks show the rates when the hard corrosion element of 10% is added.

As shown in Fig. 1, it is found that each of the optical-magnetic recording medium of the above mentioned examples 1 to 32 has ratios ( θk/ θk₀) of the Kerr rotation angles before and after the aging near 1 and good corrosion-proof compared with the optical-magnetic recording medium in which a hard corrosion element is not added. The higher the ratio of adding the hard corrosion element, the larger the degree of the effect of lowering the rate ( θk/ θk₀) becomes, and in case of adding the hard corrosion element of 5%, the ratio of the Kerr rotation angles before and after the aging is lowered to the ratio of 0.05 to 0.75, on the other hand, in case of adding the hard corrosion element of 10% the ratio of the Kerr rotation angles before and after the aging is lowered to the ratio of 0.65 to 0.90.

Moreover, as shown in Fig. 2, every optical-magnetic recording medium of the above mentioned examples 1 to 32 has the ratio (Hc/Hc₀) of the coercive force before and after the aging near 1 compared with the optical-magnetic recording medium in which a hard corrosion element is not added except the medium of adding platinum of 5%, thereby it has been also found that the optical-magnetic recording medium of the examples 1 to 32 has good corrosion-proof. The optical-magnetic recording medium to which platinum of 5% was added as a hard corrosion element had a nearly same degree ratio of the coercive force before and after the aging as the optical-magnetic recording medium in which a hard corrosion element was not added. However, in case of adding platinum of 10% the ratio of the coercive force before and after the aging rose up about 1.6 time compared with the ratio in case of adding no hard corrosion element and there was an effect on the improvement of the corrosion-proof. The higher the ratio of adding the hard corrosion element, the larger the ratio of the coercive force before and after the aging became, and in case of adding the hard corrosion element of 5% the ratio of the coercive force before and after the aging was lowered to the ratio of 0.40 to 0.90, on the other hand, in case of adding the hard corrosion element of 10% the ratio became 0.62 to 0.96.

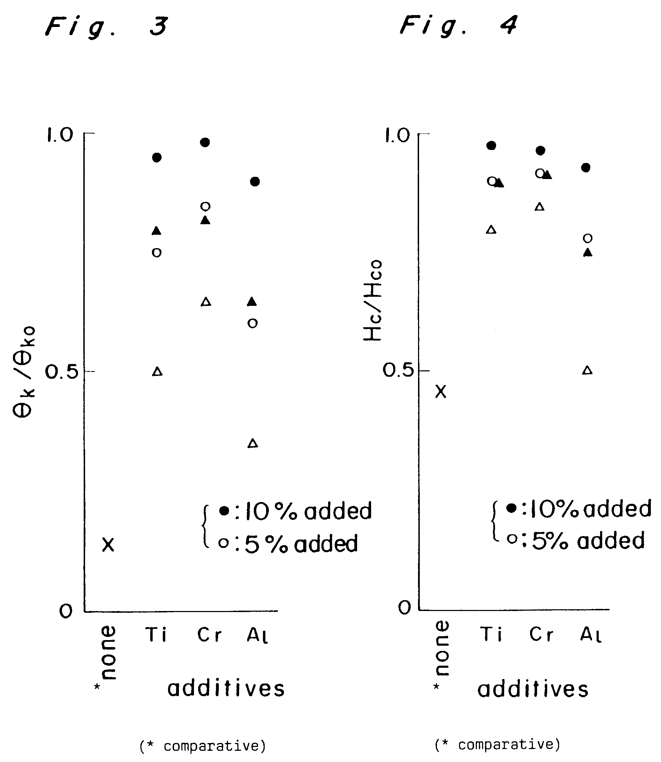

Fig. 3 is a graph showing the rate of the change of the Kerr rotation angle when the optical-magnetic recording medium in case of adding phosphorus as a concentration quickening element to Tb₂₀Fe₈₀ alloy and furthermore adding the hard corrosion element (examples 33 to 38) is aged for 25 hours in the atmosphere of 80°C and 85% RH, Fig. 4 is a graph showing the rate of the change of the coercive force when the optical-magnetic recording medium of the above mentioned examples is aged under the same condition as the above mentioned condition, wherein the white circular marks show the rate when the hard corrosion element of 5% is added and the black circular marks show the rate when the hard corrosion element of 10% is added. Moreover for comparison, the rates in case of the alloy of adding no phosphorus but the hard corrosion element of 5% are shown by white triangular marks and the rates in case of the alloy of adding no phosphorus but the hard corrosion element of 10% are shown by black triangular marks and the rate in case of the alloy made of only Tb₂₀Fe₈₀ of adding no other element is shown by x mark.

As shown in Fig. 3, it is found that the optical-magnetic recording medium of the above mentioned examples 33 to 38 in which phosphorus is added as a concentration quickening element has a ratio ( θk/ θk₀) of the Kerr rotation angle near 1 before and after the aging and that the corrosion-proof is improved compared with the medium in which phosphorus is not added

As shown in Fig. 4, in case of the optical-magnetic recording medium of the above mentioned examples 33 to 38 the ratio (Hc/Hc₀) of the coercive force before and after the aging becomes near 1 compared with the case of the optical-magnetic recording medium in which phosphorus is not added, thereby it is also found that the corrosion-proof is improved.

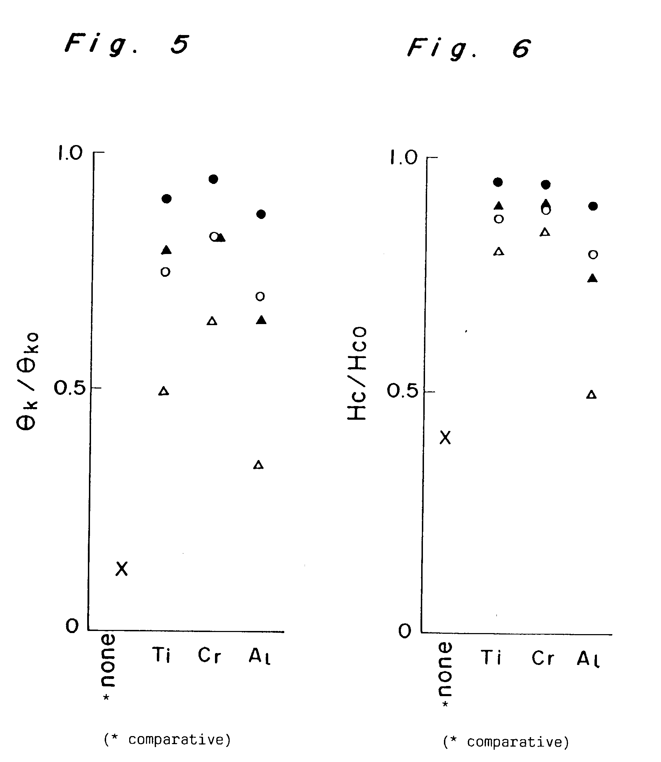

Fig. 5 is a graph showing the rate of the change of the Kerr rotation angle when the optical-magnetic recording medium in case of adding carbon as a concentration quickening element and adding a hard corrosion element to Tb₂₀Fe₈₀ alloy (examples 39 to 44) is aged for 25 hours in the atmosphere of 80° C and 85% RH, Fig. 6 is a graph showing the rate of the change of the coercive force when the optical-magnetic recording medium of each of the above mentioned examples is aged under the same condition as mentioned above, wherein the white circle marks show the rates when the hard corrosion element of 5% is added and the black circle marks show the ratio when the hard corrosion element of 10% is added. Moreover for comparison, the rates in case of the alloy of adding no carbon but the hard corrosion element of 5% are shown by white triangular marks, the rates in case of the alloy of adding no carbon but the hard corrosion element of 10% are shown by black triangular marks, and the rate in case of the alloy made of only Tb₂₀Fe₈₀ of adding no other element is shown by x mark.

As shown in Fig. 5, in case of the optical-magnetic recording medium of the above mentioned examples 39 to 44 in which carbon is added as a concentration quickening element the ratio ( θk/ θk₀) of the Kerr rotation angle before and after the aging becomes more near 1 compared with the ratio in case of the optical-magnetic recording medium in which carbon is not added, thereby it is found that the corrosion-proof is improved.

As shown in Fig. 6, in case of the optical-magnetic recording medium of the above mentioned examples 39 to 44 the ratio (Hc/Hc₀) of the coercive force before and after the aging becomes near 1 compared with the ratio in case of the optical-magnetic recording medium in which carbon is not added, thereby it is also found that the corrosion-proof is improved.

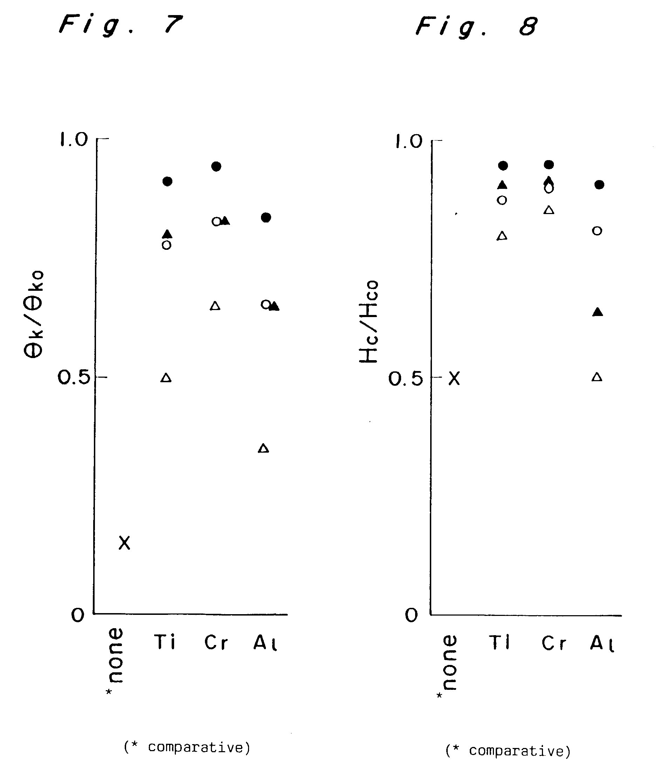

Fig. 7 is a graph showing the rate of the change of the Kerr rotation angle when the optical-magnetic recording medium in case of adding boron as a concentration quickening element and adding a hard corrosion element to Tb₂₀Fe₈₀ alloy (examples 44 to 50) is aged for 25 hours in the atmosphere of 80° C and 85% RH, Fig. 8 is a graph showing the rate of the change of the coercive force when the optical-magnetic recording medium of each of the above mentioned examples is aged under the same condition as mentioned above, wherein the white circle marks show the rates when the hard corrosion element of 5% is added and the black circle marks show the rates when the hard corrosion element of 10% is added. Moreover for comparison, the rates in case of the alloy of adding no boron but the hard corrosion element of 5% are shown by white triangular marks, the rates in case of the alloy of adding no boron but the hard corrosion element of 10% are shown by black triangular marks, and the rate in case of the alloy made of only Tb₂₀Fe₈₀ of adding no other element is shown by x mark.

As shown in Fig. 7, in case of the optical-magnetic recording medium of the above mentioned examples 44 to 50 in which boron is added as a concentration quickening element the ratio of the Kerr rotation angle before and after the aging becomes near 1 compared with the ratio in case of the optical-magnetic recording medium in which boron is not added, thereby it is found that the corrosion-proof is improved.

As shown in Fig. 8, in case of the optical-magnetic recording medium of the above mentioned examples 44 to 50 the ratio of the coercive force before and after the aging becomes near 1 compared with the ratio in case of the optical-magnetic recording medium in which boron is not added, thereby it is also found that the corrosion-proof is improved.

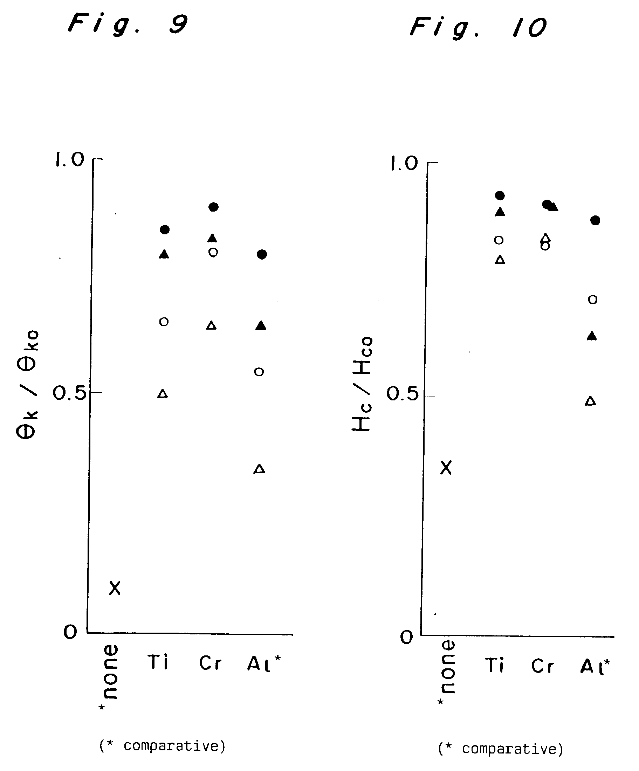

Fig. 9 is a graph showing a rate of the change of the Kerr rotation angle when the optical-magnetic recording medium in case of adding silicon as a concentration quickening element and adding a hard corrosion element to Tb₂₀Fe₈₀ alloy (examples 51 to 56) is aged for 25 hours in the atmosphere of 80° C and 85% RH, Fig. 10 is a graph showing a rate of the change of the coercive force when the optical-magnetic recording medium of each of the above mentioned examples is aged under the same condition as mentioned above, wherein the white circle marks show the rates when the hard corrosion element of 5% is added and the black circle marks show the rates when the hard corrosion element of 10% is added. Moreover for comparison, the rates in case of the alloy to which no silicon but the hard corrosion element of 5% is added are shown by white triangular marks, the rates in case of the alloy to which no silicon but the hard corrosion element of 10% is added are shown by black triangular marks, and the rate in case of the alloy made of only Tb₂₀Fe₈₀ to which no other element is added is shown by x mark.

As shown in Fig. 9, in case of the optical-magnetic recording medium of the above mentioned examples 51 to 56 in which silicon is added as a concentration quickening element the ratio of the Kerr rotation angle before and after the aging becomes near 1 compared with the ratio in case of the optical-magnetic recording medium in which silicon is not added, thereby it is found that the corrosion-proof is improved.

As shown in Fig. 10, in case of the optical-magnetic recording medium of the above mentioned examples 51 to 56 the ratio of the coercive force before and after the aging becomes near 1 compared with the ratio in case of the optical-magnetic recording medium in which silicon is not added, thereby it is also found that the corrosion-proof is improved.

As shown in Figs. 3 to 10, it is found that the recording material in which phosphorus is added has the largest effect to keep the ratio of the Kerr rotation angle before and after the aging and the ratio of the coercive force of all the recording materials in which a concentration quickening element is added.

The essential point of the present invention is in that the recording layer of the optical-magnetic recording medium is formed by the recording material made of the alloy of a rare earth metal and a transition metal and an additive element having hard corrosion in case of a simple substance and in that the recording layer is formed by the recording material made of the alloy made by adding the concentration quickening element to the above mentioned alloy, and the additive elements with hard corrosion and the concentration quickening elements are not limited to those used in the above mentioned examples.

### EXAMPLES 57 TO 64 (inventive)

There were formed 8 examples of the recording layers in which the components of the concentration elements were different on the surface of the glass substrate by using recording materials made by adding the element selected from a group of the hard corrosion elements consisting of chromium, phosphorus, boron, carbon, silicon and germanium to Tb₂₅Fe₆₅Co₁₀ alloy. The components of the material of the recording layer of each of the examples are shown in Table 5.

The above mentioned recording layers were formed to be 200nm (2000 Å) thick by the RF sputtering method. The condition of the sputtering was as following. First of all, after the vacuum cylinder was exhausted to 1.33^{.}10⁻⁵ Pa (10⁻⁷ Torr) referring to the vacuum condition, argon gas was poured into the vacuum cylinder so that the pressure of the argon gas was controlled to be 0.667 Pa (5x10⁻³ Torr). The target was formed by disposing one or more small plate of chromium with a predetermined area calculated from the sputtering rate above a circular plate of the alloy made of terbium, iron, cobalt and two kinds of concentration quickening elements. The sputtering power was 250 to 300 W, the distance between the substrate and the target was 55 mm, the revolution speed was 30 r.p.m..

### EXAMPLES 65 TO 72 (inventive)

There were formed 8 examples of the recording layers in which the components of the concentration elements were different on the surface of the glass substrate by using recording materials made by adding aluminum as a hard corrosion element and two kinds of concentration elements to Tb₂₅Fe₆₅Co₁₀ alloy. The component of the material of the recording layer of each of the examples are shown, in Table 6. Besides, the means of forming the recording layer and the thickness of the layer and the sputtering condition are quite same as those in case of the above mentioned examples 57 to 64.

### EXAMPLES 73 TO 80 (inventive)

There were formed 8 examples of the recording layers in which the components of the concentration elements were different on the surface of the glass substrate by using recording materials made by adding niobium as a hard corrosion element and two kinds of concentration elements to Tb₂₅Fe₆₅Co₁₀ alloy. The components of the material of the recording layer of each of the examples are shown in Table 7. Besides, the means of forming the recording layer and the thickness of the layer and the sputtering condition are quite same as those in case of the above mentioned examples 57 to 72.

### EXAMPLES 81 TO 88 (inventive)

There were formed 8 examples of the recording layers in which the components of the concentration elements were different on the surface of the glass substrate by using a recording material made by adding titanium as a hard corrosion element and two kinds of concentration elements to Tb₂₅Fe₆₅Co₁₀ alloy. The components of the material of the recording layer of each of the examples are shown in Table 8. Besides. the means of forming the recording layer and the thickness of the layer and the sputtering condition are quite same as those in case of the above mentioned examples 57 to 80.

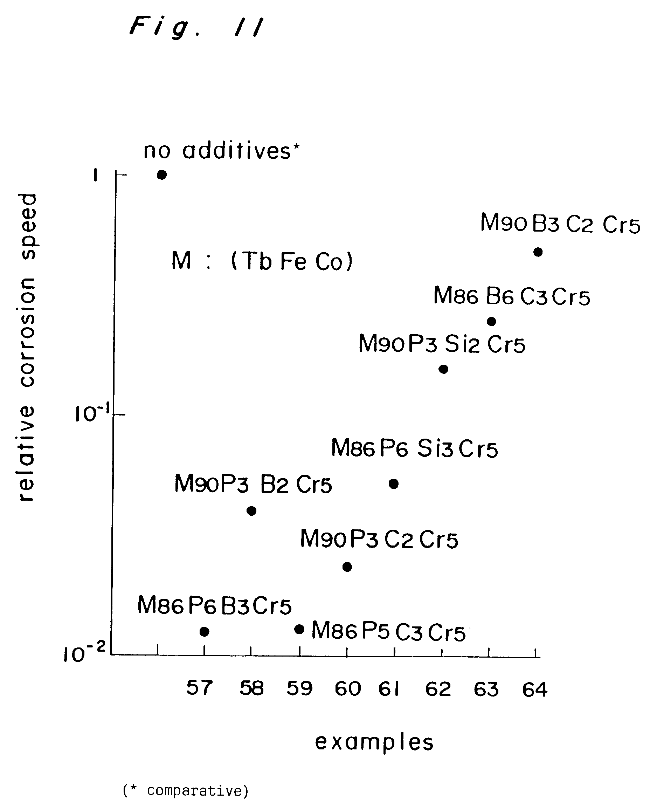

The effect of the optical-magnetic recording medium of each of the above mentioned examples is explained on the basis of Figs. 11 to 15 as follows

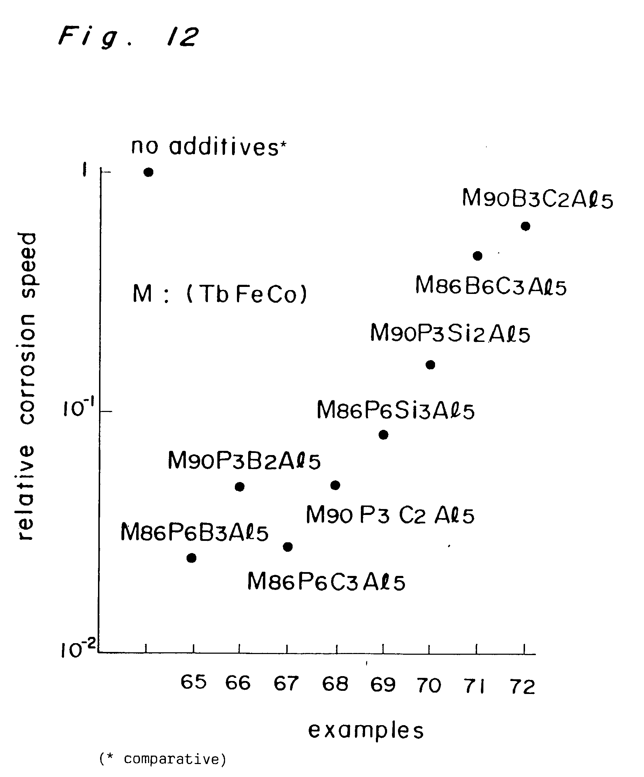

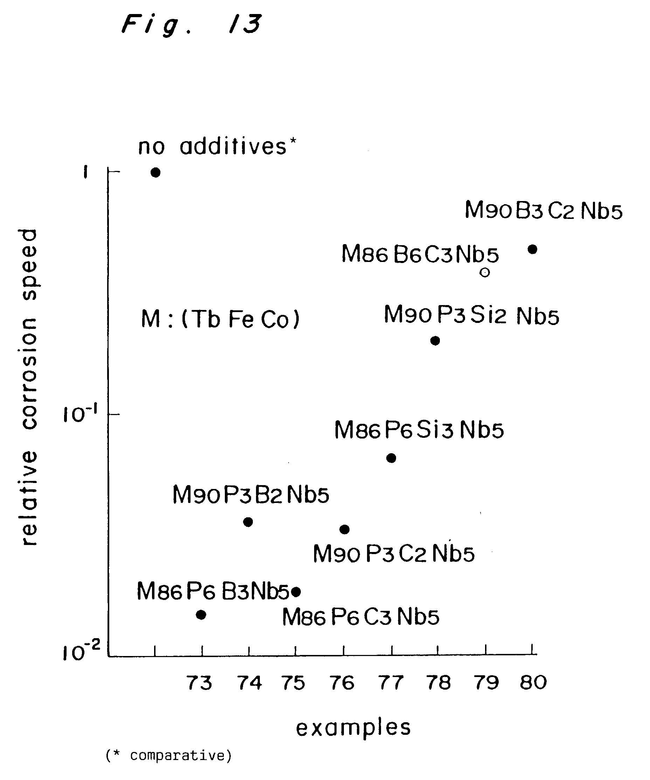

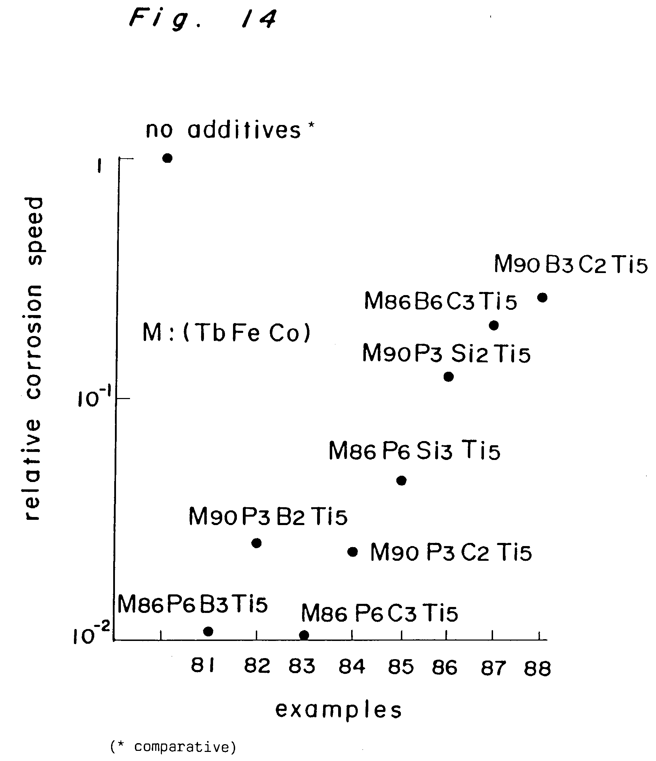

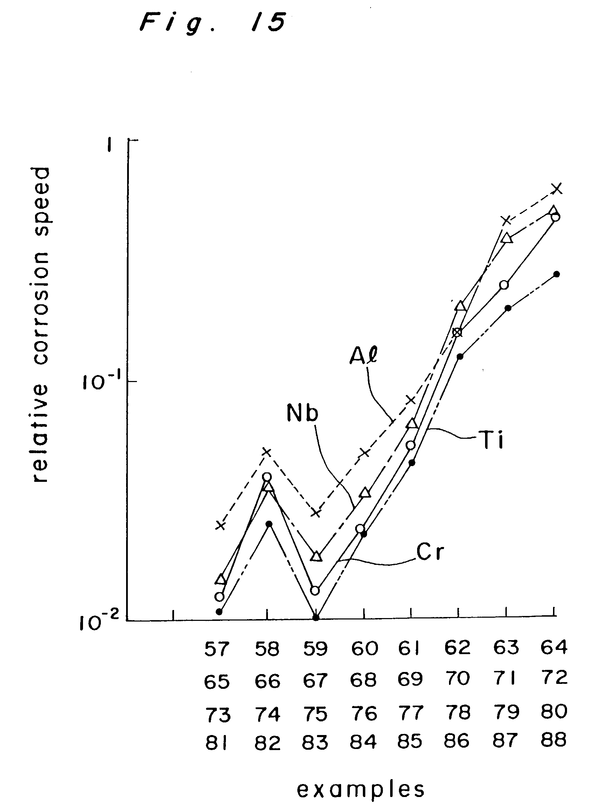

Fig. 11 is a graph for explaining the effects of the above mentioned examples 57 to 64, Fig. 12 is a graph for explaining the effects of the above mentioned examples 65 to 72, Fig. 13 is a graph for explaining the effect of the above mentioned examples 73 to 80, Fig. 14 is a graph for explaining the effect of the above mentioned examples 81 to 88, Fig. 15 is a graph showing the influence of the hard corrosion additive elements, wherein the horizontal axis of each graph shows the example respectively and the vertical axis of each graph shows the relative corrosion speed of the recording layer of each of the examples when the corrosion speed of the recording layer made of the recording material to which the concentration element is not added is 1. The added letters in the graphs show the components of the recording layer. Besides, the corrosion speed was measured by immersing the materials in NaCI solution of 3% and by measuring the decrease of the weight of the materials at regular intervals.

As shown in Fig. 11 to 14, it is found that in case of the optical-magnetic recording medium of the present invention in which two kinds of the concentration element are added, the corrosion speed is decreased compared with the corrosion speed in case of the optical-magnetic recording medium in which the concentration element is not added and according to the present invention the effect of the improvement of the corrosion-proof is assured. Moreover, according to the present invention, the optical-magnetic recording medium in which phosphorus is added as a concentration element has a high corrosion-proof, particularly in case that phosphorus and boron are added and in case that phosphorus and carbon are added as two kinds of the concentration elements the remarkable effect can be obtained. Although no remarkable difference can be found in reference to the influence of the first element of hard corrosion, as shown in Fig. 15, in case of adding titanium the corrosion-proof is highest. next in case of adding chromium, niobium, aluminum in turn the corrosion-proof tends to be reduced.

Moreover, the essential point of the present invention is in that the recording layer of the optical-magnetic recording medium according to the present invention is formed by the alloy made of rare earth metal, transition metal, the first additive element having hard corrosion in case of a simple substance, and the plural kinds of the second additive element quickening the corrosion of the easy corrosion element in the alloy and the concentration of the above mentioned first additive element on the surface of the alloy, therefore, the above mentioned first and second additive elements are not limitted to the elements used in the above mentioned examples.

The optical-magnetic recording medium of the present invention is formed by forming the recording layer made of the alloy of the above mentioned components on the surface of the disc substrate. Moreover, in order to increase the corrosion-proof a protecting layer with good corrosion-proof may be coated between the disc substrate and the above mentioned recording layer or on the surface of the above mentioned recording layer or either of these parts.

As described above, in case of the optical-magnetic recording medium of the present invention, since the recording layer is formed by the recording materials made by adding the hard corrosion elements to the alloy of rare earth metal and transition metal, the hard corrosion elements is concentrated on the surface of the recording layer so that the corrosion-proof of the recording layer can be remarkably improved. Particularly, in case that the recording material in which the concentration quickening element in addition to the hard corrosion element is added is used, the easy corrosion element in the alloy is corroded to fall away so that the hard corrosion element is quickly concentrated on the surface of the recording layer, therefore, the corrosion-proof of the recording layer can be more remarkably improved. Moreover, since it is not necessary to coat the surface of the recording layer with a protecting film, the corresponding production process of the optical-magnetic recording medium can be so simplified that the production cost can be reduced.

In case of adding the hard corrosion element and the concentration element to the amorphous alloy of rare earth metal and transition metal, the hard corrosion element is concentrated so as to form a strong corrosion-proof film on the surface of the alloy in a short time so that the corrosion-proof of the recording layer can be remarkably improved. Also in this case, since it is not necessary to coat the surface of the recording layer with a protecting film, the corresponding production process of the optical-magnetic recording medium can be so simplified that the production cost can be reduced.

Furthermore. in different from the case of coating a protecting film even if the hard corrosion element on the surface is removed by some reasons, the hard corrosion element included in the alloy are separated by turns on the surface of the recording layer to keep the effect of the corrosion-proof.

**Table 1**

| EXAMPLE | COMPONENT |
|---|---|
| 33 | (Tb₁₇Fe₆₈P₁₅)₉₅Ti₅ |
| 34 | (Tb₁₇Fe₆₈P₁₅)₉₅Cr₅ |
| 35 | (Tb₁₇Fe₆₈P₁₅)₉₅Al₅ |
| 36 | (Tb₁₇Fe₆₈P₁₅)₉₀Ti₁₀ |
| 37 | (Tb₁₇Fe₆₈P₁₅)₉₀Cr₁₀ |
| 38 | (Tb₁₇Fe₆₈P₁₅)₉₀Al₁₀ |

**Table 2**

| EXAMPLE | COMPONENT |
|---|---|
| 39 | (Tb₁₇Fe₆₈C₁₅)₉₅Ti₅ |
| 40 | (Tb₁₇Fe₆₈C₁₅)₉₅Cr₅ |
| 41 | (Tb₁₇Fe₆₈C₁₅)₉₅Al₅ |
| 42 | (Tb₁₇Fe₆₈C₁₅)₉₀Ti₁₀ |
| 43 | (Tb₁₇Fe₆₈C₁₅)₉₀Cr₁₀ |
| 44 | (Tb₁₇Fe₆₈C₁₅)₉₀Al₁₀ |

**Table 3**

| EXAMPLE | COMPONENT |
|---|---|
| 45 | (Tb₁₇Fe₆₈B₁₅)₉₅Ti₅ |
| 46 | (Tb₁₇Fe₆₈B₁₅)₉₅Cr₅ |
| 47 | (Tb₁₇Fe₆₈B₁₅)₉₅Al₅ |
| 48 | (Tb₁₇Fe₆₈B₁₅)₉₀Ti₁₀ |
| 49 | (Tb₁₇Fe₆₈B₁₅)₉₀Cr₁₀ |
| 50 | (Tb₁₇Fe₆₈B₁₅)₉₀Al₁₀ |

**Table 4**

| EXAMPLE | COMPONENT |
|---|---|
| 51 | (Tb₁₇Fe₆₈Si₁₅)₉₅Ti₅ |
| 52 | (Tb₁₇Fe₆₈Si₁₅)₉₅Cr₅ |
| 53* | (Tb₁₇Fe₆₈Si₁₅)₉₅Al₅ |
| 54 | (Tb₁₇Fe₆₈Si₁₅)₉₀Ti₁₀ |
| 55 | (Tb₁₇Fe₆₈Si₁₅)₉₀Cr₁₀ |
| 56* | (Tb₁₇Fe₆₈Si₁₅)₉₀Al₁₀ |

| | |
|---|---|
| *comparative | |

**Table 5**

| EXAMPLE | COMPONENT |
|---|---|
| 57 | (Tb₂₅Fe₆₅Co₁₀)₈₆P₆B₃Cr₅ |
| 58 | (Tb₂₅Fe₆₅Co₁₀)₉₀P₃B₂Cr₅ |
| 59 | (Tb₂₅Fe₆₅Co₁₀)₈₆P₆C₃Cr₅ |
| 60 | (Tb₂₅Fe₆₅Co₁₀)₉₀P₃C₂Cr₅ |
| 61 | (Tb₂₅Fe₆₅Co₁₀)₈₆P₆Si₃Cr₅ |
| 62 | (Tb₂₅Fe₆₅Co₁₀)₉₀P₃Si₂Cr₅ |
| 63 | (Tb₂₅Fe₆₅Co₁₀)₈₆B₆C₃Cr₅ |
| 64 | (Tb₂₅Fe₆₅Co₁₀)₉₀B₃C₂Cr₅ |

**Table 6**

| EXAMPLE | COMPONENT |
|---|---|
| 65 | (Tb₂₅Fe₆₅Co₁₀)₈₆P₆B₃Al₅ |
| 66 | (Tb₂₅Fe₆₅Co₁₀)₉₀P₃B₂Al₅ |
| 67 | (Tb₂₅Fe₆₅Co₁₀)₈₆P₆C₃Al₅ |
| 68 | (Tb₂₅Fe₆₅Co₁₀)₉₀P₃C₂Al₅ |
| 69 | (Tb₂₅Fe₆₅Co₁₀)₈₆P₆Si₃Al₅ |
| 70 | (Tb₂₅Fe₆₅Co₁₀)₉₀P₃Si₂Al₅ |
| 71 | (Tb₂₅Fe₆₅Co₁₀)₈₆B₆C₃Al₅ |
| 72 | (Tb₂₅Fe₆₅Co₁₀)₉₀B₃C₂Al₅ |

**Table 7**

| EXAMPLE | COMPONENT |
|---|---|
| 73 | (Tb₂₅Fe₆₅Co₁₀)₈₆P₆B₃Nb₅ |
| 74 | (Tb₂₅Fe₆₅Co₁₀)₉₀P₃B₂Nb₅ |
| 75 | (Tb₂₅Fe₆₅Co₁₀)₈₆P₆C₃Nb₅ |
| 76 | (Tb₂₅Fe₆₅Co₁₀)₉₀P₃C₂Nb₅ |
| 77 | (Tb₂₅Fe₆₅Co₁₀)₈₆P₆Si₃Nb₅ |
| 78 | (Tb₂₅Fe₆₅Co₁₀)₉₀P₃Si₂Nb₅ |
| 79 | (Tb₂₅Fe₆₅Co₁₀)₈₆B₆C₃Nb₅ |
| 80 | (Tb₂₅Fe₆₅Co₁₀)₉₀B₃C₂Nb₅ |

**Table 8**

| EXAMPLE | COMPONENT |
|---|---|
| 81 | (Tb₂₅Fe₆₅Co₁₀)₈₆P₆B₃Ti₅ |
| 82 | (Tb₂₅Fe₆₅Co₁₀)₉₀P₃B₂Ti₅ |
| 83 | (Tb₂₅Fe₆₅Co₁₀)₈₆P₆C₃Ti₅ |
| 84 | (Tb₂₅Fe₆₅Co₁₀)₉₀P₃C₂Ti₅ |
| 85 | (Tb₂₅Fe₆₅Co₁₀)₈₆P₆Si₃Ti₅ |
| 86 | (Tb₂₅Fe₆₅Co₁₀)₉₀P₃Si₂Ti₅ |
| 87 | (Tb₂₅Fe₆₅Co₁₀)₈₆B₆C₃Ti₅ |
| 88 | (Tb₂₅Fe₆₅Co₁₀)₉₀B₃C₂Ti₅ |

## Claims

1. An optical-magnetic recording medium comprising a recording layer formed by an alloy of a rare earth metal, a transition metal and in addition thereto a first additive element, wherein the rare earth metal is terbium, the transition metal is Fe or Fe in combination with Co and characterized in that the first additive element has resistance to corrosion in elementary form and is at least a kind of element selected from the group of aluminium and copper.

2. An optical-magnetic recording medium comprising a recording layer formed by an alloy of a rare earth metal, a transition metal and in addition thereto a first additive element, wherein the rare earth metal is terbium, the transition metal is Fe or Fe in combination with Co and the first additive element has resistance to corrosion in elementary form and is at least a kind of element selected from a group consisting of titanium, platinum, zirconium, vanadium, tantalum, molybdenum, ruthenium, rhodium, palladium, niobium, iridium, hafnium, chromium, aluminium and copper characterized in that the layer furthermore comprises a second additive element being at least a kind of element selected from the group consisting of silicon, germanium, boron, carbon and phosphorus, excluding the combination of aluminium being the first element and silicon being the second element.

3. The optical-magnetic recording medium according to claim 2, characterized in that the recording layer comprises plural kinds of second additive elements quickening the concentration of the above mentioned first additive element on the surface layer which are plural elements selected from semi-metal, semi-conductor, non-metal.

4. The optical-magnetic recording medium according to claim 3, wherein the second additive elements quickening the concentration of the first additive element on the surface layer are plural elements selected from a group consisting of silicon, germanium, boron, carbon and phosphorus.

5. The optical-magnetic recording medium according to claim 4, wherein plural kinds of the second additive elements including phosphorus are added.

6. The optical-magnetic recording medium according to claim 3 to 5 wherein a protecting film for protecting the above mentioned recording layer is formed on at least either the surface of the recording layer or between the above mentioned recording layer and the disc substrate.

## Patentansprüche

1. Optisch-magnetisches Aufzeichnungsmedium, umfassend eine Aufzeichnungsschicht, die aus einer Legierung aus einem Seltenerdmetall, einem Übergangsmetall und außerdem einem ersten addititven Element gebildet ist, wobei das Seltenerdmetall Terbium ist, das Übergangsmetall Fe oder Fe in Kombination mit Co ist, dadurch gekennzeichnet, daß das erste additive Element in elementarer Form Korrosionsfestigkeit besitzt und wenigstens eine Elementart ist, die aus der Gruppe Aluminium und Kupfer ausgewählt ist.

2. Optisch-magnetisches Aufzeichnungsmedium, umfassend eine Aufzeichnungsschicht, die aus einer Legierung aus einem Seltenerdmetall, einem Übergangsmetall und außerdem einem ersten addititven Element gebildet ist, wobei das Seltenerdmetall Terbium ist, das Übergangsmetall Fe oder Fe in Kombination mit Co ist und das erste additive Element in elementarer Form Korrosionsfestigkeit besitzt und wenigstens eine Elementart ist, die aus der Gruppe ausgewählt ist, die aus Titan, Platin, Zirconium, Vanadium, Tantal, Molybdän, Ruthenium, Rhodium, Palladium, Niob, Iridium, Hafnium, Chrom, Aluminium und Kupfer besteht, dadurch gekennzeichnet, daß die Schicht weiterhin ein zweites additives Element umfaßt, das wenigstens eine Elementart ist, die aus der Gruppe ausgewählt ist, die aus Silicium, Germanium, Bor, Kohlenstoff und Phosphor besteht, wobei die Kombination von Aluminium als erstem Element und Silicium als zweitem Element ausgeschlossen ist.

3. Optisch-magnetisches Aufzeichnungsmedium nach Anspruch 2, dadurch gekennzeichnet, daß die Aufzeichnungsschicht mehrere Arten zweiter additiver Elemente umfaßt, die die Konzentration des oben genannten ersten additiven Elements auf der Oberflächenschicht stimulieren und mehrere Elemente sind, die aus Halbmetallen, Halbleitern und Nichtmetallen ausgewählt sind.

4. Optisch-magnetisches Aufzeichnungsmedium nach Anspruch 3, wobei die die Konzentration des ersten additiven Elements auf der Oberflächenschicht stimulierenden zweiten additiven Elemente mehrere Elemente sind, die aus der aus Silicium, Germanium, Bor, Kohlenstoff und Phosphor bestehenden Gruppe ausgewählt sind.

5. Optisch-magnetisches Aufzeichnungsmedium nach Anspruch 4, wobei mehrere Arten der zweiten additiven Elemente, einschließlich Phosphor, zugesetzt werden.

6. Optisch-magnetisches Aufzeichnungsmedium nach Anspruch 3 bis 5, wobei ein Schutzfilm zum Schutz der oben genannten Aufzeichnungsschicht wenigstens entweder auf der Oberfläche der Aufzeichnungsschicht oder zwischen der oben genannten Aufzeichnungsschicht und dem Substrat der Platte ausgebildet ist.

## Revendications

1. Milieu d'enregistrement magnéto-optique comprenant une couche d'enregistrement formée par un alliage d'un métal des terres rares, d'un métal de transition et en outre d'un premier élément additif, où le métal des terres rares est le terbium, le métal de transition est Fe ou Fe en combinaison avec Co et caractérisé en ce que le premier élément additif a une résistance à la corrosion sous forme élémentaire et est au moins un type d'élément choisi dans le groupe de l'aluminium et du cuivre.

2. Milieu d'enregistrement magnéto-optique comprenant une couche d'enregistrement formée par un alliage d'un métal des terres rares, d'un métal de transition et en outre d'un premier élément additif, où le métal des terres rares est le terbium, le métal de transition est Fe ou Fe en combinaison avec Co et le premier élément additif a une résistance à la corrosion sous forme élémentaire et est au moins un type d'élément choisi dans un groupe consistant en le titane, le platine, le zirconium, le vanadium, le tantale, le molybdène, le ruthénium, le rhodium, le palladium, le niobium, l'iridium, le hafnium, le chrome, l'aluminium et le cuivre, caractérisé en ce que la couche comprend en outre un second élément additif qui est au moins un type d'élément choisi dans le groupe consistant en le silicium, le germanium, le bore, le carbone et le phosphore, à l'exclusion de la combinaison de l'aluminium comme premier élément et du silicium comme second élément.

3. Milieu d'enregistrement magnéto-optique selon la revendication 2, caractérisé en ce que la couche d'enregistrement comprend plusieurs types de seconds éléments additifs accélérant la concentration du premier élément additif mentionné ci-dessus sur la couche de surface qui sont plusieurs éléments sélectionnés parmi les semi-métaux, les semi-conducteurs, les non-métaux.

4. Milieu d'enregistrement magnéto-optique selon la revendication 3, dans lequel les seconds éléments additifs accélérant la concentration du premier élément additif sur la couche de surface sont plusieurs éléments sélectionnés dans un groupe consistant en le silicium, le germanium, le bore, le carbone et le phosphore.

5. Milieu d'enregistrement magnéto-optique selon la revendication 4, dans lequel plusieurs types de seconds éléments additifs incluant le phosphore sont ajoutés.

6. Milieu d'enregistrement magnéto-optique selon les revendications 3 à 5 dans lequel un film protecteur pour protéger la couche d'enregistrement mentionnée ci-dessus est formé sur au moins la surface de la couche d'enregistrement ou entre la couche d'enregistrement mentionnée ci-dessus et le substrat du disque.
